(19) Europäisches Patentamt
European Patent Office
Office européen des brevets

(11) **EP 0 889 321 B1**

(12) **EUROPÄISCHE PATENTSCHRIFT**

(45) Veröffentlichungstag und Bekanntmachung des Hinweises auf die Patenterteilung:
**15.08.2007   Patentblatt 2007/33**

(51) Int Cl.:
*G01N 22/00* *(2006.01)*       *G01N 22/04* *(2006.01)*

(21) Anmeldenummer: **98110821.0**

(22) Anmeldetag: **12.06.1998**

(54) **Feuchte- und Dichtesensor**

Moisture and density sensor

Capteur d'humidité et de densité

(84) Benannte Vertragsstaaten:
**DE ES FR GB IT SE**

(30) Priorität: **02.07.1997   DE 29711571 U**

(43) Veröffentlichungstag der Anmeldung:
**07.01.1999   Patentblatt 1999/01**

(73) Patentinhaber: **TEWS ELEKTRONIK Dipl.-Ing. Manfred Tews**
**22459 Hamburg (DE)**

(72) Erfinder: **Herrmann, Rainer, Dipl.-Phys.**
**20253 Hamburg (DE)**

(74) Vertreter: **Glawe, Delfs, Moll**
**Patentanwälte**
**Rothenbaumchaussee 58**
**20148 Hamburg (DE)**

(56) Entgegenhaltungen:
**EP-A- 0 292 571            EP-B- 0 468 023**
**DE-A- 2 552 954            US-A- 4 297 874**
**US-A- 5 105 158            US-A- 5 554 935**

**Beschreibung**

Die Erfindung betrifft einen Mikrowellenresonator zum Anschließen an ein Messgerät zur Messung des Dichte- und/oder Feuchteprofils in Längsrichtung einer Probe, der eine Durchgangsbohrung senkrecht zu seiner flächigen Erstreckung aufweist, die durch metallische, sich in Längsrichtung erstreckenden Wandungen begrenzt ist, wobei der Innenraum des Resonators im Wesentlichen flach mit einer Dicke ist, die kleiner als die dazu senkrechten Querabmessungen ist, und die Verwendung eines solchen Mikrowellenresonators.
Häufig ist es erforderlich, das Dichte- und/oder Feuchteprofil in Längsrichtung einer Probe zu messen. Wichtige Beispiele hierfür sind die Dichtemessung in einem Zigarettenstrang, die Dichtemessung oder Feuchtigkeitsmessung in einem Wollfaden, einem Kunststoffprofil oder anderen Strängen. Aber auch bei kürzeren Proben müssen solche Messungen vorgenommen werden. Wenn man das Dichte- und/oder Feuchteprofil einer Holzfaserplatte oder Spanplatte bestimmen will, so wird man häufig einen zylindrischen Kern ausbohren, entlang dessen Zylinderachse man dann das Dichte- oder Feuchteprofil aufnimmt.

Für solche Messungen von Dichte- und Feuchteprofilen sind verschiedene Verfahren bekannt.

Mit Zigarettenmaschinen werden Zigaretten in großer Stückzahl hergestellt (bis zu 15.000 Zigaretten in der Minute). Um dabei eine optimale Tabakverdichtung an einem oder beiden Zigarettenenden zu erhalten, ist eine exakte Messung der Dichte notwendig. Dies wird heute in der Regel mit Hilfe von Gammastrahlen durchgeführt. Die Dämpfung der hochenergetischen Photonen ist dabei sowohl abhängig von der Dichte als auch von der Zusammensetzung des zu messenden Materials, insbesondere aber auch vom Wassergehalt des Tabaks. Die Dichtemessung ist daher mit Unsicherheiten behaftet. Außerdem ist man natürlich bestrebt, die nicht ungefährliche Gammastrahlungsmeßtechnik zu vermeiden. Die Verwendung von Infrarotstrahlung für solche Messungen hat den Nachteil starker Empfindlichkeit auf Oberflächeneffekte. Es können daher keine absoluten Dichtewerte, sondern nur prozentuale Angaben relativ zu einem Maximalwert einer Tabaksorte erzielt werden.

Auch die Dichteprofilmessung bei Holzfaserplatten ist im Hinblick auf die Qualitätssicherung eine wichtige Prozeßkenngrö-ße. Die bisher wichtigste Meßmethode ist auch die Mitte der 70er Jahre entwickelte Gammastrahlungsmethode. Auch hier ist wieder von Nachteil, daß die Empfindlichkeit auch auf Produktfeuchtigkeit die Meßgenauigkeit der Dichtemessung begrenzt.

Es ist bekannt, sowohl die Dichte als auch die Feuchtigkeit von Materialien mit Hilfe von Mikrowellen zu messen, wobei die zu untersuchenden Produkte in einen Mikrowellenresonator eingesetzt werden (EP 0 468 023 B1). Der Nachteil dieses vorbekannten Verfahrens besteht aber darin, daß die Resonatoren und Proben verhältnismäßig groß sein müssen, so daß eine Messung eines Dichte- oder Feuchteprofils mit einer Auflösung von Millimetern nicht möglich ist. Der Grund liegt darin, daß die Mikrowellenfrequenz nicht beliebig erhöht werden kann, da sonst keine genauen Meßwerte mehr erhalten werden können. Die Messungen sollten daher mit Mikrowellen in einem Frequenzbereich von 0,5 GHz bis höchstens 15 GHz durchgeführt werden, was Wellenlängen von 60 cm bis 2 cm entspricht. Eine besonders günstige Frequenz ist dabei 2,5 GHz, was einer Wellenlänge von 12 cm entspricht. Die Mikrowellenresonatoren haben dabei normalerweise Abmessungen von der Größenordnung einer Wellenlänge.

Es ist ein Mikrowellenresonator der eingangs genannten Art bekannt, der innen einen Vorsprung aufweist, durch den sich das zu messende Material hindurch bewegt (EP 0 292 571 Anspruch 1). Mit diesem Mikrowellenresonator können auch Messungen mit verhältnismäßig niedriger Frequenz durchgeführt werden. Der eigentliche Meßbereich ist dabei aufgrund des geringen Abstandes zwischen Vorsprungende und gegenüberliegender Hohlraumwand verhältnismäßig klein. Es tritt aber eine sehr große Feldinhomoginität auf. Das Mikrowellenfeld ist in der Mitte sehr groß und nimmt zum Rand hin deutlich ab, so daß einerseits keine gleichmäßige Messung über die ganze Probe möglich ist und andererseits Schwankungen der Meßwerte auftreten, wenn sich die Probe auch in Querrichtung bewegt.

Es ist ein Mikrowellenresonator der eingangs genannten Art bekannt, der zusammen mit einem zweiten Mikrowellenresonator verwendet wird (EP 0 753 755 A2, Fig. 1). Dieser Resonator ist mit Luft gefüllt. Er weist eine Abmessung senkrecht zur Durchführungsrichtung A der Probe auf, die nicht ganz das Doppelte der Dicke des Resonators beträgt.

Die Aufgabe der Erfindung besteht in der Schaffung eines Mikrowellenresonators sowie eines Messgerätes mit einem solchen Mikrowellenresonator, mit denen Dichte- und Feuchtemessungen mit höherer Genauigkeit und Auflösung durchgeführt werden können.

Diese Aufgabe wird durch die Merkmale des Anspruchs 1 gelöst.

Durch die Kombination eines sehr flachen Mikrowellenresonators und die Befüllung desselben mit einem Dielektrikum wird im eigentlichen Meßbereich ein sehr homogenes Mikrowellenfeld erreicht, wodurch genaue Messungen über den gesamten Querschnitt der Probe durchgeführt werden können, wobei ungenaue Ausrichtung der Probe in Querrichtung nur einen sehr kleinen Einfluß auf das Meßergebnis hat.

Es ist zwar bekannt, einen Mikrowellenresonator aus einem Dielektrikum herzustellen (US 5,105,158 A), der aber für sich einen Mikrowellenresonator bildet, ohne von einem metallischen Leiter, der den eigentlichen Mikrowellenhohlraum bildet wie beim Anmeldungsgegenstand umschlossen zu sein. Dieser Resonator aus einem Dielektrikum dient auch nicht dazu, Messungen in Längsrichtung einer Probe vorzunehmen. Vielmehr sollen dort Messungen an flächigen Proben vorgenommen werden. Die Feldkonfiguration ist wegen dieser Unterschiede eine völlig andere, so daß der Entgegenhaltung keine Anregungen in Richtung auf den erfindungsgemäßen Mikrowellenresonator entnommen werden können.

Erstaunlicherweise kann der Mikrowellenresonator sehr flach gemacht werden, wobei seine Dicke wesentlich kleiner ist als die Wellenlänge der Mikrowellen. Man erhält trotzdem am Probenort ausreichende Feldstärken, so daß man durch die Verschiebung der Resonanzkurve sowie die Verbreiterung derselben auf die an sich bekannte Weise (EP 0 468 023 B1) Feuchtigkeit und Dichte in einem kleinen Teilvolumen messen kann, so daß das Dichte- und/oder Feuchteprofil in Längsrichtung der Probe aufgenommen werden kann. Der Meßwertbereich kann auf 1 bis 3 mm begrenzt werden, wobei man die kleineren Längen z.B. für Zigaretten, die größeren für Holzfaserproben verwenden wird. Durch die metallischen Wandungen wird die Ausbreitung der Mikrowellen in den freien Raum verhindert.

Wenn gemäß einer vorteilhaften Ausführungsform der Resonator mit einem Dielektrikum gefüllt ist, das den Resonator mit Ausnahme der Probendurchgangsöffnung ausfüllt, wird die Resonanzfrequenz erhöht bzw. bei konstanter Frequenz die Dimensionen des Hohlraums verringert. Die Messungen können dabei mit Mikrowellen niedriger Leistung (unter 10 Milliwatt) durchgeführt werden, so daß eine ins Gewicht fallende Erwärmung der Probe nicht stattfindet.

Vorteilhafterweise ist die Dicke des Resonators mindestens 5 mal kleiner als die Querabmessungen desselben, insbesondere mindestens 10 mal kleiner. Als Dielektrikum wird vorteilhafterweise ein solches gewählt, das eine relative Dielektrizitätskonstante ε von 2 bis 100, vorteilhafterweise von 7 bis 15 hat.

Wenn die Durchgangsbohrungen durch metallische Rohre nach außen verlängert sind, so wird zusätzlich zu den Wandungen der Durchgangsbohrung verhindert, daß sich Mikrowellen durch die Durchgangsbohrungen nach außen ausbreiten können, wodurch das Resonanzverhalten verschlechtert und die Messung ungenauer oder sogar unmöglich würde.

Als besonders vorteilhaft hat sich ein zylinderförmiger Resonator erwiesen, der im $E_{n10}$-Mode (n = 0, 1, 2) betrieben wird. Eine andere vorteilhafte Ausführungsform zeichnet sich dadurch aus, daß der Resonator rechteckig ist und im $E_{110}$-, $E_{120}$- oder $E_{220}$-Mode betrieben wird.

Die Erfindung wird im folgenden anhand von vorteilhaften Ausführungsformen unter Bezugnahme auf die beigefügten Zeichnungen beispielsweise beschrieben. Es zeigen:

Fig. 1   die Mikrowellenresonanzkurve eines Resonators im Zustand ohne Probe (leerer Resonator) oder mit Probe (gefüllter Resonator);

Fig. 2   im Querschnitt eine Ausführungsform eines zylindrischen Resonators bei der Ausmessung einer Zigarette;

Fig. 3   und

Fig. 4   den Verlauf der elektrischen Feldlinien in einem kreiszylindrischen Resonator;

Fig. 5a  den Feldlinienverlauf bei einem Mikrowellenresonator in der Nähe des Probendurchgangs ohne Dielektrikum innerhalb des Resonators;

Fig. 5b  die Intensität der elektrischen Feldstärke in Querrichtung bei der Ausführungsform der Fig. 5 a;

Fig. 6a  in ähnlicher Ansicht wie in Fig. 5a den Fall eines mit Dielektrikum versehenen Mikrowellenresonators;

Fig. 6b  die elektrische Feldstärke in Querrichtung bei der Ausführungsform der Fig. 6a;

Fig. 7   eine grafische Darstellung des mit dem erfindungsgemäßen Meßgerät gemessenen Feuchte- und Dichteprofils einer Holzfaserplatte;

Fig. 8   das Dichteprofil der Holzfaserplatte der Fig. 7 gemessen mit Hilfe von Gammastrahlung;

Fig. 9   und

Fig. 10  das Ergebnis von Dichte- und Feuchteprofilmessung an Zigaretten; und

Fig. 11  einen rechteckigen Mikrowellenresonator der Erfindung.

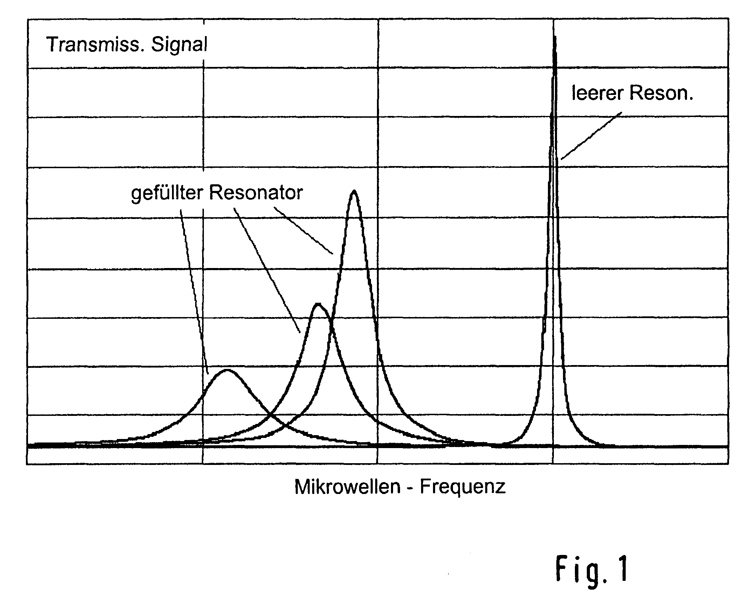

In Fig. 1 sind die Resonanzkurven eines Resonators gezeigt. Man sieht, daß sich die Resonanzfrequenz mit steigender Füllung des Resonators zu niedrigeren Frequenzen verschiebt, wobei gleichzeitig die Amplitude der Resonanzkurven abnimmt und die Breite zunimmt. Daraus kann nach dem bekannten Verfahren die Dichte und die Feuchte bestimmt werden.

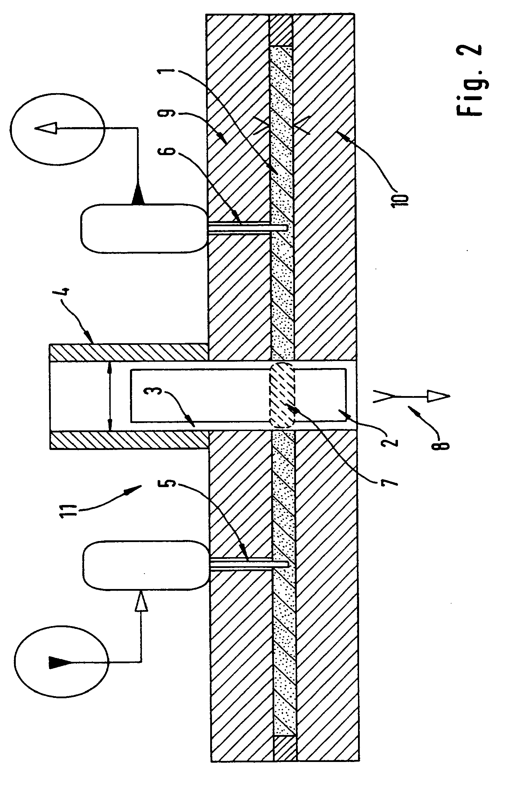

In Fig. 2 ist ein Querschnitt durch einen erfindungsgemäßen kreiszylindrischen Mikrowellenresonator 11 gezeigt, der durch eine obere metallische Wand 9 und eine untere metallische Wand 10 begrenzt ist und mit Keramikmaterial 1 gefüllt ist. Er wird zum Ausmessen einer Holzprobe 2 verwendet, die sich in Richtung des Pfeiles 8 durch den Resonator 11 hindurchbewegt. Der Aufbau des entsprechenden Mikrowellenresonators für Zigaretten ist dabei im Prinzip der gleiche, wobei lediglich die Abmessungen desselben geringer sind. Insbesondere hat dort der Durchlaß für die Probe nicht einen Durchmesser von 35 mm, sondern einen wesentlich kleineren Durchmesser, der nur unwesentlich größer ist als der Zigarettendurchmesser, d.h. ungefähr 9 bis 10 mm. Die Probe 2 wird durch eine Durchgangsbohrung 3 hindurchbewegt, an der außen noch ein kurzes Metallrohr 4 angebracht ist, durch die das Austreten von Mikrowellen verhindert werden soll. Die Mikrowellen werden über eine Antenne 5 eingekoppelt und über eine weitere Antenne 6 ausgekoppelt. Statt der Transmissionsmessung kann selbstverständlich auch eine Reflexionsmessung mit nur einer Antenne Verwendung finden. Die aktive Meßzone, die ungefähr die Dicke des Resonators 1 hat, ist mit 7 bezeichnet.

Die spezielle Fokussierung auf einen Raumbereich von wenigen Millimetern (bis hinab auf 1-3 mm) gelingt durch Anregung der Resonatoren in speziellen kreiszylindrischen E-Resonanzmoden (transversalen H-Moden, d.h. Moden, die in Richtung der Resonatorachse nur ein elektrisches Feld haben), deren longitudinale Modenkennzahl Null ist, was gleichbedeutend ist mit der Forderung, daß die elektrischen Feldlinien zwischen der metallischen Bodenplatte und Deckplatte auf dem kürzesten Wege verlaufen. Praktische Bedeutung haben für die Zigarettenmessung der $E_{010}$-Resonanzmodus (Grundmodus des kreiszylindrischen Resonators) sowie bei der Holzfaserplattenmessung die $E_{110}$- und $E_{210}$-Modi (1. Kennzahl: azimutale Symmetriebeschreibung bei Rotation um die longitudinale Achse, 2. Kennzahl: radiale Symmetriebeschreibung = Anzahl der Knoten in radialer Richtung, 3. Kennzahl: longitudinale Symmetriebeschreibung).

Auch Rechteckresonatoren lassen sich für die Profilmessung nutzen, indem im Grundmodus statt des $E_{010}$ der rechteckige $E_{110}$-Modus derart eingesetzt wird, daß die Abflachung zur Fokussierung so erfolgt, daß die elektrischen Feldlinien auf dem kürzesten Weg zwischen Boden- und Deckplatte verlaufen. Als höhere Moden können der $E_{120}$-, bzw. der $E_{220}$-Modus verwandt werden.

Die Resonanzfrequenz des Profilsensors mit einer Resonatorfüllung (z.B. Keramikmaterial mit DK-Wert = $\varepsilon$) läßt sich grob abschätzen, durch Anwendung der bekannten, für den geschlossenen Resonator geltenden Ausdrücke. Beim kreiszylindrischen Resonator mit Resonatordurchmesser D gilt für den $E_{mn0}$-Modus:

$$f = c\, X_{mn} \Big/ \left( \pi \sqrt{\varepsilon}\, D \right)$$

(c = Vakuum-Lichtgeschwindigkeit, $X_{mn}$= n.te Nullstelle der Besselfunktion m.ter Ordnung).

Bei Rechteckresonator mit den inneren Kantenlängen quer zur Profilrichtung A und B gilt für den $E_{mn0}$-Modus:

$$f = \frac{c}{2\pi\sqrt{\varepsilon}} \sqrt{\left(\frac{\pi}{A}m\right)^2 + \left(\frac{\pi}{B}n\right)^2}$$

Dadurch kann der Abstand zwischen Boden und Deckplatte extrem klein gemacht werden, ohne daß sich die Resonanzfrequenz des Sensors wesentlich ändert. Dieser Abstand ist aber bestimmend für die räumliche Fokussierung des Meßfeldes. Damit ist der Abstand von Boden und Deckel vor allem durch die benötigte Länge der Einkopplungs-Antennen begrenzt. Eine weitere Grenze wird durch das im Probenbereich zu einer erfolgreichen Messung nötige Mindestmaß an eine Feldstärke gegeben: Je kleiner der Abstand zwischen Boden- und Deckplatte im Resonator ist, um so kleiner ist die Feldstärke im Probenbereich. Praktisch lassen sich auf diese Weise Ortsauflösungen bis zu 1 mm in longitudinaler Richtung erzielen. Bei der Zigaretten-Profilmessung genügt eine Fokussierung auf 3 mm, bei der Holzfaserplatten-Profilmessung auf 2 mm.

Der Resonatorhohlraum ist durch zwei Lochöffnungen für die Durchführung der zu vermessenden Probe versehen, die aber jeweils durch 2 (im Falle des Grundmodes mindestens 5 mm, bei höheren Moden mindestens 10mm lange) metallische Kamine oberhalb und unterhalb des Resonatorbereiches ergänzt werden müssen. Damit können durch die Lochöffnungen für die Ober- und Unterseite des Resonators keine Mikrowellen austreten. Denn solange die Dielektrizitätskonstante des zu vermessenden Probenmaterials unterhalb eines kritischen Wertes liegt, der für alle Proben erfüllt wird, ist die für die Ausbreitung in den Anschlußkaminen typische Abschneidefrequenz deutlich über der Resonanzfrequenz des Resonators (ein ungefähres Maß für die kritische DK (Dielektrizitätskonstante) bildet für luftgefüllte kreiszylindrische Resonatoren, deren dritte Modenkennzahl 0 ist, etwa das Quadrat des Verhältnisses des Resonator- und des Probenrohrdurchmessers D, bzw. d $DK_{krit} = (D/d)^2$, das bei D = 90mm und d = 10mm eine kritische DK von 81 ergibt).In longitudinaler Richtung nimmt somit die Mikrowellenintensität exponentiell sehr schnell ab, die gemessenen Verluste kommen allein durch Eigenschaften des Produktes und nicht durch Abstrahlungseffekte zustande.

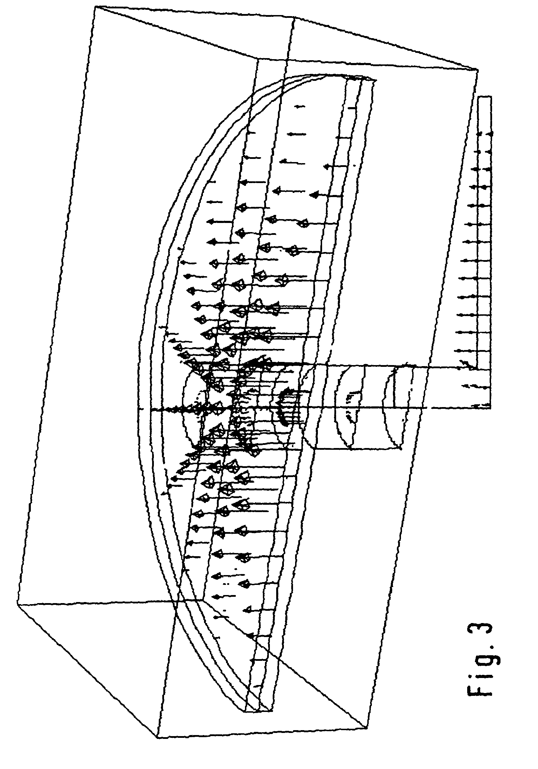

Fig. 3 zeigt die Computer-Simulation der elektrischen Feldverteilung im kreiszylindrischen Profilsensor im Resonanz-Grundmodus $E_{010}$, wobei im Probenbereich das elektrische Feld nicht wie beim geschlossenen Sensor sein Maximum hat, sondern in Folge der beiden eng benachbarten Boden- und Deckflächen ein lokales Minimum aufweist.

Die Resonanzfrequenz dieses Ausführungsbeispiels eines Zigaretten-Profilsensors zur Feuchte- und Dichtemessung beträgt 2589 MHz bei einem Resonator-Durchmesser von 90 mm , einem Probenrohrdurchmesser von 10 mm und einem Abstand von Boden- und Deckplatte von 3 mm, wenn der Resonator nicht mit einem Dielektrikum gefüllt ist.

Durch Auffüllen des Resonatorkörpers (außerhalb des Probenrohres) mit Mikrowellen-Keramikmaterial 1, wie in Fig. 2 dargestellt, läßt sich zum einen die geometrische Form des Sensors verkleinern. Durch Verwendung von Keramik mit DK = 9.2 verringert sich der Durchmesser des Resonatorkörpers von 90 mm auf 35 mm, wenn die Resonanzfrequenz etwa gleichbleibt. Dies ist für die Profilmessung bei modernen Zigarettenmaschinen erforderlich, da heute in der Regel zwei parallele Zigarettenstränge, die im Abstand von 50 mm verlaufen, gefertigt werden und die Anbringung von Resonatoren die Doppelstranganordnung nicht stören darf.

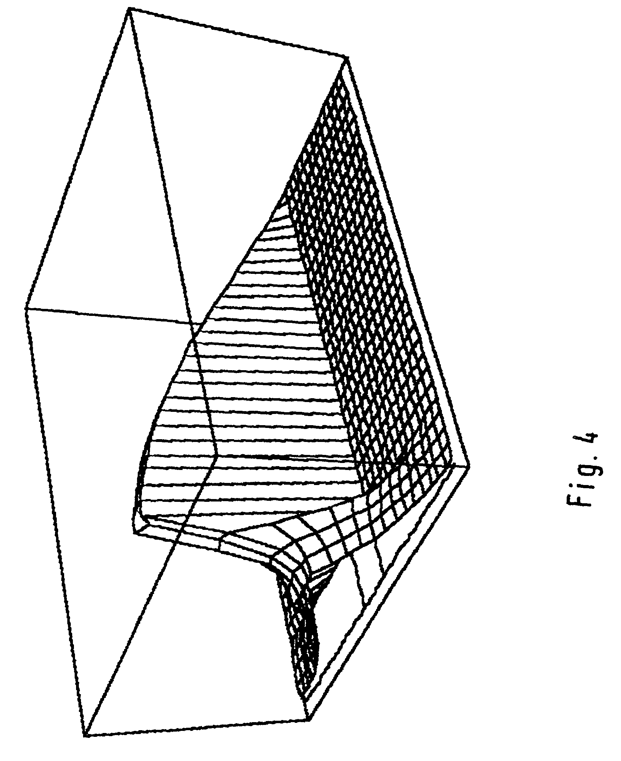

Zum anderen wird durch die Keramikeinlage eine stärkere Fokussierung des Feldes erreicht, da ohne Keramik durch das exponentielle Abklingen des elektrischen Meßfeldes im Probenrohr die Ortsauflösung eingeschränkt wird. Dieser "Fokussierungsverlust", dem mit dieser Keramikeinlage entgegengewirkt wird, ist in Fig. 4 dargestellt.

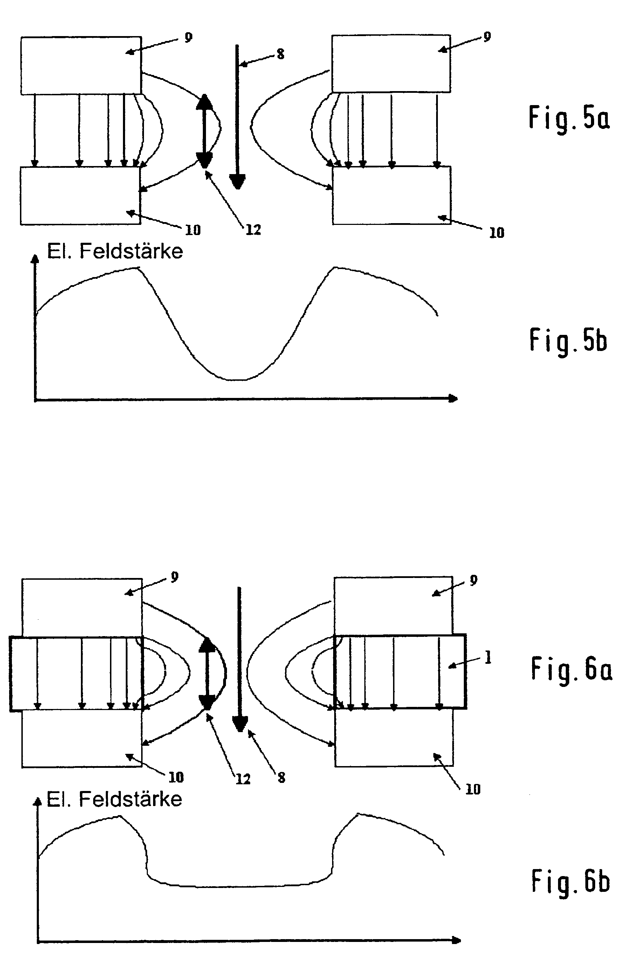

In Fig. 5a ist der Verlauf der elektrischen Feldlinien gezeigt, wenn sich zwischen den metallischen Wänden 9,10 kein Dielektrikum befindet. In Fig. 6a sind die entsprechenden Verhältnisse für den Fall gezeigt, daß sich zwischen den metallischen Wänden 9,10 ein Dielektrikum 1 befindet. Mit dem Doppelpfeil 12 ist dabei noch die Ortsauflösung bezeichnet. In den Figuren 5b bzw. 6b sind für die beiden Fälle die elektrische Feldstärke in Querrichtung eingegeben. Wie man sofort sieht, wird durch das dielektrische Keramikmaterial 1 eine wesentlich größere Homogenität über den Meßbereich erzielt.

Während bei der Zigaretten-Profilmessung mit einer Probenöffnung von 9-10 mm alle praktisch vorkommenden Zigarettensorten mit einem Sensor im Grundmodus vermessen werden können, tritt bei der Profilmessung an Spanplatten eine Besonderheit auf: Erforderlich ist ein Sensor mit einem Probenrohrdurchmesser bis 35 mm, um dann mit einem geeigneten Werkzeug aus einer Spanplatte eine Probe herauszusägen (z.B. Lochkreissägen). Da die Proben darüber hinaus eine deutlich höhere Dichte besitzen, würde bei Verwendung des gleichen Resonatortyps wie bei der Zigaretten-Profilmessung die Mikrowellendämpfung durch Umwandlung von Mikrowellenenergie in Wärme zu groß werden.

Deshalb ist es für Holzplattenprofile von Vorteil, statt des Grundmodes die höheren Resonanzmoden zu verwenden, wie den $E_{110}$- oder $E_{210}$-Modus im Falle des kreiszylindrischen Resonators (bzw. die $E_{210}$- oder $E_{220}$-Moden beim rechteckigen Resonator). Ankopplungsmethode und Probenzuführung sind identisch mit Fig. 1, lediglich die Abmessungen verändern sich, wenn man bei der etwa gleichen Resonanzfrequenz arbeiten möchte (siehe Fig. 2 in der ein Ausführungsbeispiel bei Verwendung des kreiszylindrischen $E_{110}$-Modes bei einer Resonanzfrequenz von 2.5 GHz und einem Resonator-Innendurchmesser von 180 mm dargestellt wurde, Probenrohrdurchmesser: 35 mm, Abstand. Bodenplatte - Deckplatte: 2 mm, Kaminhöhe: 10 mm).

Da der Quotient aus Resonanzfrequenz-Verbreiterung und -Verschiebung gegenüber einem Leerresonanz-Bezugs-Punktepaar nach dem eingangs zitierten Patent nur von der Feuchte, nicht aber von der Dichte abhängt, kann dieser Mikrowellen-Feuchtemeßwert zur Kalibration gegen ein direktes Feuchte-Meßverfahren (Karl-Fischer-Titration, Trockenschrankmethoden, etc) genutzt werden. Gleichzeitig besteht die Möglichkeit einer feuchteunabhängigen Dichtekalibration, indem der Feuchteeinfluß auf das primäre Mikrowellen-Dichtesignal, die Resonanzfrequenz-Verschiebung bei der Dichtekalibration erfaßt wird (als dreidimensionale Kalibrationsfläche, deren drei Achsen durch die Achse der Mikrowellen-Dichtemeßwerte, die der Mikrowellen-Feuchtemeßwerte und die der Referenz-Dichtewerte gebildet werden).

Die besonderen Eigenschaften dieser Feuchte- und Dichtekalibrationen, wie die Unabhängigkeit vom speziellen Gerätetyp, die Langzeitstabilität, die weitgehende Unabhängigkeit von Produktsorte und Zuschlagsstoffen, die Unabhängigkeit von Anbaugebiet und Oberflächeneigenschaften (Farbe, etc.), gelten ebenfalls für die vorgestellten Sensoren zur Profil-Feuchte- und Dichtemessung.

Auf dieser Grundlage lassen sich die unterschiedlichsten Zigarettensorten, basierend auf unterschiedlichen Tabakmischungen und Zuschlagsstoffen, mit einer einzigen Kalibrationskurve sowohl für die Dichte- wie die Feuchtemessung vermessen und direkt miteinander vergleichen. Entsprechendes gilt auch für die Messung bei anderen Proben oder Strängen, wie z.B. Holzfaser-Bohrkernen, Wollfäden, Kunststoffsträngen usw..

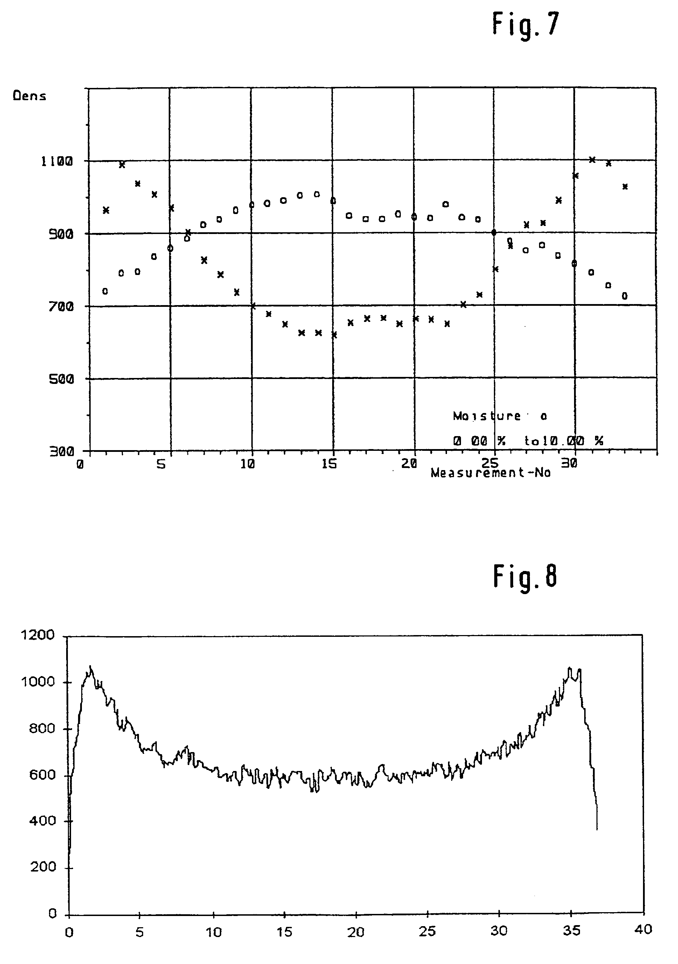

Fig. 7 zeigt die mit der Anordnung von Fig. 2 gewonnenen Meßergebnisse der gleichzeitigen Feuchte- und Dichteprofilmessungen in Holzfaserplatten. Während die Feuchtewerte an beiden Seiten der Platte wie zu erwarten ist, deutlich absinken, haben die Dichtewerte einen ähnlichen Verlauf wie die parallel durchgeführte traditionelle Methode der Gammastrahlungs - profil-Messung. Mit "X" ist dabei die Dichte im Meßbereich 300-1300 mg/cm$^2$ bezeichnet, während die Feuchte mit "0" im Bereich von 0-10 % dargestellt ist. In Fig. 8 ist das entsprechende Dichteprofil dargestellt, das mit einer Gammastrahlungsmessung bestimmt wurde. Die Probendicke betrug dabei 37 mm und der Probendurchmesser 35 mm.

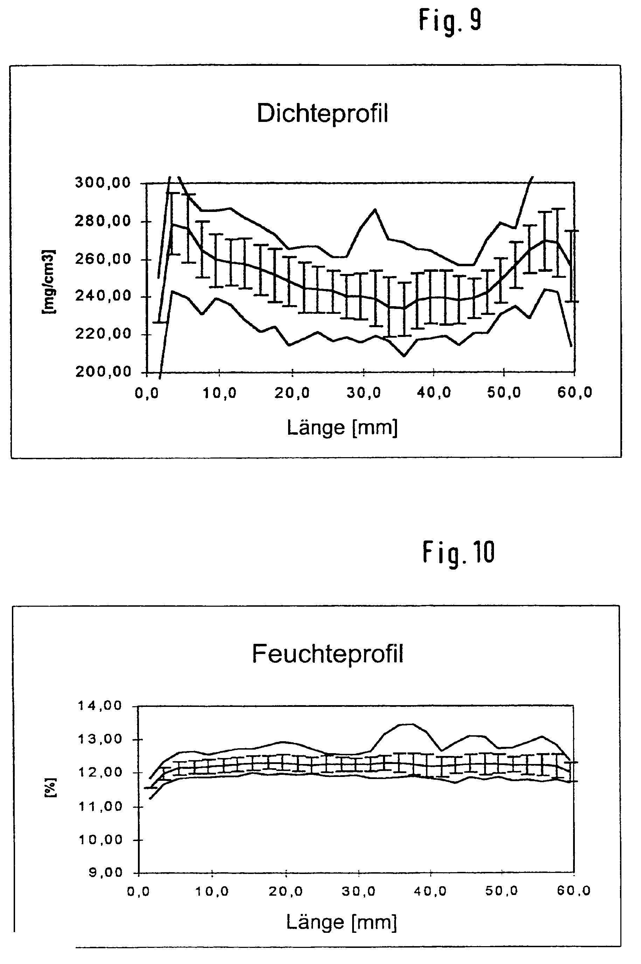

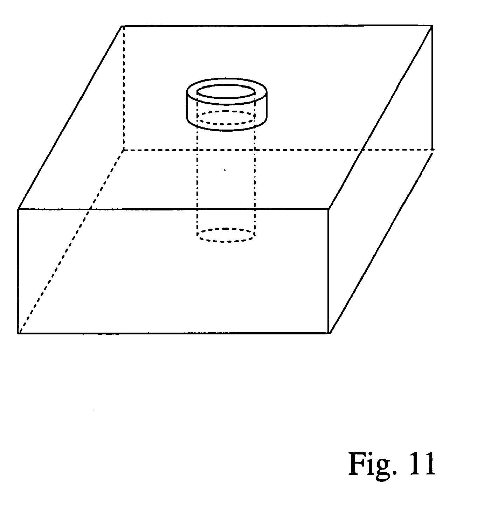

Fig. 9 und 10 zeigen die Ergebnisse der gleichzeitigen Dichte- und Feuchteprofilmessungen an Zigaretten. In Fig. 11 ist ein rechteckiger Mikrowellenresonator gezeigt.

**Patentansprüche**

1. Mikrowellenresonator zum Anschließen an ein Meßgerät zur Messung des Dichte- und/oder Feuchteprofils in Längsrichtung einer Probe, der eine Durchgangsbohrung (3) senkrecht zu seiner flächigen Erstreckung aufweist, wobei die Durchgangsbohrung durch metallische, sich in Längsrichtung erstreckende Wandungen begrenzt ist, wobei, der Innenraum (1) des Resonators im wesentlichen flach mit einer Dicke ist, die kleiner als die dazu senkrechten Querabmessungen ist,

   **dadurch gekennzeichnet, daß** die Dicke mindestens 5 mal kleiner ist als die Querabmessungen und daß der Resonator mit einem Dielektrikum gefüllt ist, das eine relative Dielektrizitätskonstante ε von 2 bis 100 hat.

**2.** Mikrowellenresonator nach Anspruch 1, **dadurch gekennzeichnet, daß** die Dicke mindestens 10 mal kleiner ist als die Querabmessungen.

**3.** Mikrowellenresonator nach einem der Ansprüche 1 oder 2, **dadurch gekennzeichnet, daß** das Dielektrium eine relative Dielektrizitätskonstante ε von 7 bis 15 hat.

**4.** Mikrowellenresonator nach einem der Ansprüche 1 bis 3, **dadurch gekennzeichnet, daß** die Durchgangsbohrung (3) durch metallische Rohre (4) nach außen verlängert ist.

**5.** Verwendung eines Mikrowellenresonators nach einem der Ansprüche 1 bis 4 in einem Meßgerät, **dadurch gekennzeichnet, daß** der Resonator (1) zylinderförmig ist und im $E_{n10}$-Mode (n = 0, 1, 2) betrieben wird.

**6.** Verwendung eines Mikrowellenresonators nach einem der Ansprüche 1 bis 4 in einem Meßgerät, **dadurch gekennzeichnet, daß** der Resonator (1) rechteckig ist und im $E_{110}$-, $E_{120}$- oder $E_{220}$-Mode betrieben wird.

## Claims

**1.** Microwave resonator for connection to a measuring instrument for measuring the density profile and/or moisture profile of a sample in the longitudinal direction, said resonator having a through bore (3) perpendicular to its planar extent, wherein the through bore is delimited by metal walls extending in the longitudinal direction, and wherein the interior (1) of the resonator is substantially flat and of a thickness which is smaller than the transverse dimensions perpendicular thereto, **characterized in that** the thickness is at least 5 times smaller than the transverse dimensions, and the resonator is filled with a dielectric which has a relative dielectric constant ε of 2 to 100.

**2.** Microwave resonator according to Claim 1, **characterized in that** the thickness is at least 10 times smaller than the transverse dimensions.

**3.** Microwave resonator according to either of Claims 1 or 2, **characterized in that** the dielectric has a relative dielectric constant ε of 7 to 15.

**4.** Microwave resonator according to any one of Claims 1 to 3, **characterized in that** the through bore (3) is extended outwards by metal tubes (4).

**5.** Use of a microwave resonator according to any one of Claims 1 to 4 in a measuring instrument, **characterized in that** the resonator (1) is cylindrical and is operated in $E_{n10}$ mode (n = 0, 1, 2).

**6.** Use of a microwave resonator according to any one of Claims 1 to 4 in a measuring instrument, **characterized in that** the resonator (1) is rectangular and is operated in $E_{110}$, $E_{120}$ or $E_{220}$ mode.

## Revendications

**1.** Résonateur à micro-ondes à raccorder à un appareil de mesure pour la mesure du profil de densité et/ou d'humidité en direction longitudinale d'un échantillon, présentant une ouverture de passage (3) perpendiculaire à son extension plane, ladite ouverture de passage étant limitée par des parois s'étendant en direction longitudinale, l'intérieur (1) du résonateur étant sensiblement plat et d'une épaisseur inférieure aux dimensions transversales qui lui sont perpendiculaires, **caractérisé en ce que** l'épaisseur est au moins de 5 fois inférieure aux dimensions transversales, et **en ce que** le résonateur est rempli d'une matière diélectrique ayant une constante diélectrique relative ε comprise entre 2 et 100.

**2.** Résonateur à micro-ondes selon la revendication 1, **caractérisé en ce que** l'épaisseur est au moins de 10 fois inférieure aux dimensions transversales.

**3.** Résonateur à micro-ondes selon l'une des revendications 1 ou 2, **caractérisé en ce que** la matière diélectrique a une constante diélectrique relative ε comprise entre 7 et 15.

**4.** Résonateur à micro-ondes selon l'une des revendications 1 à 3, **caractérisé en ce que** l'ouverture de passage (3) est prolongée par des tubes métalliques (4) vers l'extérieur.

**5.** Utilisation d'un résonateur à micro-ondes selon l'une des revendications 1 à 4 dans un appareil de mesure, **caractérisée en ce que** le résonateur (1) est de forme cylindrique et est mis en service en mode $E_{n10}$ (n = 0, 1, 2).

**6.** Utilisation d'un résonateur à micro-ondes selon l'une des revendications 1 à 4 dans un appareil de mesure, **caractérisée en ce que** le résonateur (1) est rectangulaire et est mis en service en mode $E_{110}$, $E_{120}$, ou $E_{220}$.

Fig. 1

EP 0 889 321 B1

Fig. 2

Fig. 3

Fig. 4

Fig.5a

El. Feldstärke

Fig.5b

Fig.6a

El. Feldstärke

Fig.6b

## Fig.7

## Fig.8

## Fig. 9

Dichteprofil

## Fig. 10

Feuchteprofil

Fig. 11

**EP 0 889 321 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0468023 B1
- EP 0292571 A

- EP 0753755 A2
- US 5105158 A